# FASCICULE DE BREVET EUROPEEN

(11) **EP 0 766 921 B1**
(45) Date de publication et mention de la délivrance du brevet: **31.10.2001**
(21) Numéro de dépôt: 96401776.8
(22) Date de dépôt: 13.08.1996
(51) Int. Cl.: A21D 13/08

(54) **Produit à base de pâte laminée et/ou feuilletée et/ou extrudée et son procédé de fabrication**
Produkt auf Basis von ausgewalztem und/oder Blätterteig und/oder extrudiertem Teig und Verfahren zu seiner Herstellung
Product based on sheeted and/or laminated and/or extruded dough, and process for its preparation

(30) Priorité: 18.08.1995 FR 9509929
(43) Date de publication de la demande: 09.04.1997
(73) Titulaire: Groupe Danone, F-75008 Paris (FR)
(72) Inventeur: Frisone, Franco, Genova (IT); Cisamolo, Claudio, Arenzano (Genova) (IT); Norese, Giovanni, Novi Ligure (Alessandria) (IT)
(74) Mandataire: Jacquard, Philippe Jean-Luc

(56) Documents cités:
- EP-A- 0 653 285
- WO-A-94/22323
- FR-A- 2 497 728
- FR-A- 2 615 143
- US-A- 3 213 808
- US-A- 3 513 784
- PATENT ABSTRACTS OF JAPAN vol. 018, no. 131 (C-1175), 3 Mars 1994 & JP-A-05 317021 (KOBAADE:KK), 3 Décembre 1993,
- PATENT ABSTRACTS OF JAPAN vol. 013, no. 447 (C-642), 6 Octobre 1989 & JP-A-01 171429 (HOUSE FOOD IND CO LTD), 6 Juillet 1989,

## Description

La présente invention a pour objet un produit à base de pâte laminée et/ou feuilletée et/ou extrudée et son procédé de fabrication.

Les produits tels que les biscuits, les "crackers", etc... sont généralement réalisés à partir d'une bande continue de pâte éventuellement feuilletée qui est soumise à plusieurs laminages visant à réduire progressivement son épaisseur et qui est ensuite découpée, par exemple dans un roto-découpoir à cylindres et/ou un découpoir alternatif, avant d'être soumise à une cuisson. Une telle fabrication entièrement automatisée permet d'obtenir une production de quantité élevée de produits à des prix compétitifs.

Par contre, un tel procédé de fabrication se prête actuellement mal à la réalisation de produits particuliers comportant par exemple des régions de couleurs différentes.

En effet, les techniques connues imposent une modification relativement importante du procédé de fabrication et impliquent une augmentation notable des coûts.

On connaît ainsi du Brevet des Etats-Unis US-3 911 155 (FERRERO) un procédé permettant la décoration d'une pâte crue destinée ensuite à être cuite au four, cette décoration étant effectuée en déposant des petits granules de céréale soufflée recouverts d'une couche de sucre coloré. Ce procédé est limité à un type particulier de décoration réalisé donc à partir de granules, ces granules étant nécessairement en céréales soufflées.

Le Brevet des Etats-Unis US-3 689 280 (WERNER LEHARA) a pour objet un procédé de fabrication de pâte pour des gâteaux présentant au moins deux régions ou portions se différenciant par un parfum différent ou par un ingrédient différent. Ce procédé met en oeuvre un appareil spécifique qui permet de juxtaposer en damier les régions ou portions ayant des propriétés différentes. Ce procédé présente l'inconvénient de ne pas être utilisable dans les procédés classiques et d'autre part il n'intéresse qu'un certain type de géométrie.

La présente invention a pour objet un produit comportant au moins deux pâtes de composition différente et qui peut être fabriqué par un procédé compatible avec les procédés de fabrication actuels.

L'idée de base de l'invention est d'incorporer superficiellement au-dessus et/ou au-dessous d'une bande principale de pâte laminée et/ou feuilletée et/ou extrudée une bande additionnelle ou "spaghetti" de pâte laminée et/ou feuilletée et/ou extrudée de composition différente.

L'invention concerne également un produit à base de pâte laminée et/ou feuilletée et/ou extrudée tel que biscuits, "crackers", etc... réalisé en une première pâte caractérisé en ce qu'il comporte sur au moins une face au moins une strie incorporée en surface à la première pâte et réalisée en au moins une deuxième pâte de composition différente de la première pâte, par exemple une deuxième et une troisième pâtes de compositions différentes. La ou les stries présente(nt) avantageusement au moins une couleur et/ou au moins une propriété organoleptique différente de celle du reste du produit.

L'invention concerne également un procédé de fabrication d'une pâte laminée et/ou feuilletée et/ou extrudée comportant une bande principale continue d'une première pâte laminée et/ou feuilletée et/ou extrudée ayant une première largeur L et entraînée par un tapis d'entraînement caractérisé en ce qu'il comporte une étape d'incorporation en surface à la bande principale d'au moins une bande additionnelle d'au moins une deuxième pâte laminée et/ou feuilletée et/ou extrudée ayant une deuxième largeur l inférieure à la première largeur L et présentant une viscoélasticité différente, par exemple plus élevée, de celle de la première pâte constituant la bande principale.

Dans le cas où la deuxième pâte a une viscoélasticité plus élevée que la première pâte, elle est plus souple et plus "collante" que celle-ci et lors de son incorporation mécanique à la bande principale, elle vient naturellement adhérer à la première pâte. En effet, la viscoélasticité plus élevée de la deuxième pâte implique que celle-ci contient plus d'éléments liquides et/ou éventuellement de matières grasses que la première pâte et il se produit à l'interface entre la première et la deuxième pâte un phénomène de mouillage localisé qui procure une adhérence d'autant plus forte que la viscoélasticité des deux pâtes est différente. Le phénomène de mouillage localisé à l'interface entre les deux pâtes est similaire dans le cas où la première pâte a une viscoélasticité plus élevée que la deuxième pâte.

En particulier, dans le cas où la première et la deuxième pâtes présentent de l'eau, des matières solides non grasses et des matières grasses ainsi qu'éventuellement au moins un agent additionnel tel que la levure et/ou le sel et/ou au moins un colorant alimentaire et/ou un arôme et/ou la lécithine et/ou le sirop de glucose et/ou le gluten, on choisit avantageusement le rapport pondéral E/S entre l'eau et les matières solides non grasses de la deuxième pâte différent du, et par exemple supérieur au, rapport pondéral E/S de la première pâte, ledit rapport pondéral E/S étant avantageusement compris entre 0,2 et 0,4 pour une des pâtes par exemple la première pâte et entre 0,3 et 0,8 pour l'autre pâte. Le rapport entre ledit rapport pondéral E/S d'une des pâtes, par exemple la deuxième pâte et ledit rapport pondéral E/S de l'autre pâte sont avantageusement compris entre 1,2 et 2,5.

La/les bande(s) additionnelle(s) est/sont avantageusement réalisée(s) par extrusion mais elle(s) peut/peuvent être laminée(s) et/ou feuilletée(s). La/leur mise en place peut être facilitée en maintenant en tension la/les bande(s) additionnelle(s) lors de l'étape d'incorporation, afin de garantir un alignement constant sur la ligne de façonnage. Ceci peut être en particulier réalisé en adoptant pour la/les bande(s) additionnelle(s) une vitesse, par exemple une vitesse d'extrusion, légèrement inférieure à la vitesse de déplacement de la bande principale, la bande additionnelle étant ainsi mise en tension par effet d'élasticité.

Les bandes additionnelles peuvent avoir la même composition ou des compositions différentes, et elles peuvent présenter des couleurs différentes.

Selon un mode de réalisation préféré, le procédé selon l'invention comporte l'incorporation d'au moins une bande additionnelle sur la face inférieure de la bande principale. La viscoélasticité de la deuxième pâte est avantageusement choisie de manière telle que son adhérence à la première pâte soit supérieure à son adhérence au tapis d'entraînement de la bande principale.

Ladite incorporation d'au moins une bande additionnelle sur la face inférieure de la bande principale s'effectue de préférence en amont d'un dispositif feuilleteur (ou "sheeter").

Le procédé selon l'invention peut comporter l'incorporation d'au moins une dite bande additionnelle sur la face supérieure de la bande principale. Cette incorporation peut en particulier s'effectuer en amont d'un dispositif de calibrage ou en amont d'un découpoir tel qu'un roto-découpoir à cylindres.

Le procédé selon l'invention se prête particulièrement à ce que la bande additionnelle présente une couleur et/ou une propriété organoleptique différente de celle de la bande principale. En particulier, la bande additionnelle peut être d'une couleur qui évoque le parfum qui est incorporé à la pâte, par exemple la deuxième pâte peut être parfumée au bacon et présenter la couleur d'un morceau de bacon, et une texture différente plus ou moins croustillante, ou bien elle peut être parfumée au cacao et présenter la couleur du chocolat.

L'incorporation d'au moins une bande additionnelle peut s'effectuer selon un trajet en zigzag, par exemple en soumettant une tête d'extrusion de ladite bande additionnelle à un mouvement alternatif.

La première pâte peut comporter tout d'abord entre 30 et 40% en poids de farine de blé, de maïs et/ou de riz et/ou bien encore d'au moins une autre céréale, entre 20% et 30% de fécule et/ou d'amidon et/ou de pomme de terre déshydratée (par exemple en granulés, flocons ou farine) et/ou de manioc déshydraté, entre 15 et 20% d'eau, entre 4 et 8% de matières grasses solides, le reste étant constitué par au moins un agent additionnel tel que la levure et/ou la poudre levante et/ou le levain et/ou le sel et/ou au moins un colorant alimentaire et/ou un arôme et/ou la lécithine, et/ou le sirop de glucose et/ou le gluten et/ou une ou plusieurs enzymes, puis après cuisson, entre 5 et 20% d'huile de pulvérisation.

La deuxième pâte peut comporter tout d'abord entre 25 et 35% en poids de farine de blé et/ou de maïs et/ou de riz et/ou bien encore d'au moins une autre céréale, entre 15 et 25% de fécule et/ou d'amidon et/ou de pomme de terre déshydratée et/ou de manioc déshydraté, entre 20% et 35% d'eau, entre 3% et 7% de matières grasses solides, le reste étant constitué par au moins un agent additionnel tel que la levure et/ou la poudre levante et/ou le levain et/ou le sel et/ou au moins un colorant alimentaire et/ou un arôme et/ou la lécithine, et/ou le sirop de glucose et/ou le gluten et/ou différents autres ingrédients, puis après cuisson, entre 5 et 20% d'huile de pulvérisation.

D'autres caractéristiques et avantages de l'invention apparaîtront mieux à la lecture de la description qui va suivre, donnée à titre d'exemple non limitatif, en liaison avec les dessins dans lesquels :
- la figure 1 représente une ligne de fabrication de produits tels que des "crackers", selon l'art antérieur ;
- la figure 2 représente une ligne de fabrication de produits tels que des "crackers", selon l'invention
- la figure 3 représente, vu en plan, un détail de la figure 2 ;
- la figure 4 illustre une variante de l'invention ;
- la figure 5 représente un produit obtenu par le procédé selon l'invention.

Des biscuits 5 du type "crackers" sont réalisés à partir de pâte feuilletée 1 qui est obtenue en sortie d'un dispositif de feuilletage ou feuilleteur 10. Le feuilleteur 10 reçoit à son entrée des bandes superposées de pâte 8 à feuilleter. La pâte crue 1 qui se présente sous la forme d'une bande large de largeur L est transportée par un premier convoyeur à bande 20₁ jusqu'à des dispositifs de calibrage à cylindres successivement 11, 12 et 13 qui ont pour fonction de laminer la pâte de manière à former à partir de la bande 1, des bandes 2, 3 et 4 dont l'épaisseur est de plus en plus réduite. Entre les dispositifs de calibrage 11 et 12 et 12 et 13 et en aval du dispositif 13, des convoyeurs à bandes respectivement 20₂, 20₃ et 20₄ entraînent les bandes 2, 3 et 4 à des vitesses de plus en plus élevées en proportion de la réduction d'épaisseur obtenue par laminage dans les dispositifs de calibrage 11, 12 et 13.

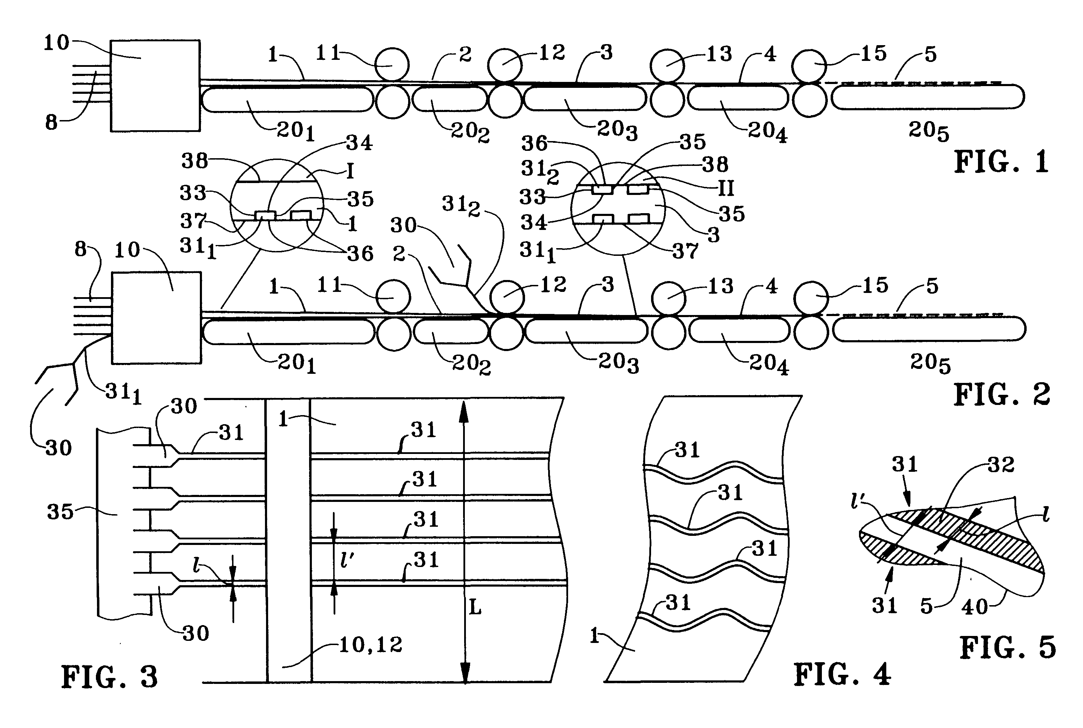

La bande 4 est enfin amenée par le convoyeur 20₄ à un roto-découpoir 15 à cylindres pour découper la bande 4 en pièces individuelles 5 qui sont entraînées par un convoyeur à bande 20₅ et qui, après cuisson et pulvérisation d'huile de pulvérisation, deviendront des biscuits de type "crackers" de contour 40 comportant des stries 32 de largeur 1 espacées entre elles de 1' (figure 5).

Le procédé selon l'invention sera maintenant décrit en liaison avec la figure 2 :

Le procédé selon l'invention propose d'introduire à l'une ou l'autre des bandes principales 1, 2, 3 et 4 de largeur L, une ou plusieurs bandes ou lanières ou "spaghettis" de pâte 31 de largeur 1 incorporées à la face supérieure et/ou à la face inférieure de la bande principale 1.

Dans l'exemple représenté, une ou plusieurs extrudeuses 30 incorporent une ou plusieurs bandes de pâte 31₁, à la face inférieure de la bande principale 1. Les bandes 31₁ ont une largeur 1 < L (par exemple 1 = 5 mm) et une épaisseur inférieure à celle de la bande 1.

Cette incorporation s'effectue dans le feuilleteur 10 lors de la dernière opération de feuilletage de telle sorte que chaque bande 31₁ se trouve incorporée sur trois de ses faces 33, 34 et 35 à la face inférieure 37 de la bande 1 tout en ayant sa quatrième face 36 sensiblement coplanaire avec la face inférieure 37 de la bande 1 (voir encadré I de la figure 2). La bande 1, dans laquelle ont été incorporés les bandes 31₁ est ensuite co-laminée avec les bandes 31₁ dans les dispositifs de calibrage 11, 12 et 13, avant d'être découpée dans le roto-découpoir à cylindres 15.

La vitesse d'extrusion de l'extrudeuse 30 est avantageusement choisie légèrement inférieure (par exemple de quelques pour-cents) à la vitesse de sortie de la bande 1 du feuilleteur 10.

D'autre part, une incorporation d'une ou plusieurs bandes 31₂ fournies par autant d'extrudeurs 30 est éventuellement réalisée en amont d'un des dispositifs de calibrage 11, 12 et/ou 13 (par exemple comme représenté dans le dispositif 12 et dans l'encadré II de la figure 2) ; ou bien encore en amont du roto-découpoir à cylindres 15.

Le ou les extrudeurs 30 sont disposés de telle sorte que leurs bandes 31₂ respectives sont fournies à proximité immédiate des cylindres des dispositifs de calibrage 11, 12 ou 13, et/ou du roto-découpoir 15. En outre, la vitesse d'extrusion des bandes 31₂ est choisie sensiblement inférieure (par exemple de quelques pour-cents) à la vitesse du convoyeur à bande 20 disposé en amont du dispositif de calibrage référencé 12 dans l'exemple représenté ou du roto-découpoir 15 de manière à maintenir la bande 31 en extension élastique, ce qui favorise la régularité de son incorporation surfacique à la bande principale (référencée 2 dans l'exemple représenté). Chaque bande 31₂ se trouve incorporée à la face supérieure 38 de la bande 3, en aval du dispositif de calibrage 12, sur trois de ses faces 33, 34, 35, tout en ayant sa quatrième face 36 coplanaire à la face 38.

En pratique, le nombre de bandes 31₁ ou 31₂ peut être élevé. L est en général de l'ordre de 1 mètre ou plus. 1 peut être par exemple égal à 1 mm et les bandes 31 peuvent être séparées de 1' = 10 mm. Ceci peut être réalisé avec un nombre correspondant de têtes d'extrusion 30 portées par un support commun 35 (figure 3). Une ou plusieurs extrudeuses 30 peuvent être animées d'un mouvement alternatif perpendiculairement au sens de déplacement de la bande 2 de manière à obtenir des bandes 31 incorporées en zigzag comme représenté à la figure 4.

Les bandes 31 sont réalisées en une pâte de composition différente de celle de la première pâte constituant la bande principale 1, 2, 3, 4 de manière à lui conférer une viscoélasticité différente.

On rappellera que la rhéologie d'une pâte boulangère ou d'une pâte à biscuit se caractérise essentiellement par la viscoélasticité que l'on peut déterminer par exemple à l'aide du test suivant : une contrainte appliquée brusquement et maintenue constante pendant un certain temps entraîne une déformation élastique instantanée ainsi qu'une déformation différée ; la suppression brusque d'une contrainte entraîne de la même façon une recouvrance élastique instantanée suivie d'une recouvrance différée, de nature viscoélastique. D'une manière générale, plus une pâte est élastique, plus la déformation différée est importante et plus la recouvrance différée est importante et donc plus la viscoélasticité est importante.

La viscosité d'une pâte est modifiée en faisant varier les proportions entre les matières solides non grasses, l'eau et les matières grasses.

En particulier, la viscoélasticité et donc le "collant" de la pâte, est d'autant plus élevée que la pâte contient plus d'eau, et on agira préférentiellement sur le rapport pondéral E/S entre l'eau et la ou les matières solides non grasses (hors additifs) de chacune des pâtes.

Une mesure du "collant" de la pâte peut être effectuée de la manière suivante. Un échantillon de pâte est extrudé à travers une petite grille. Un module cylindrique est ensuite descendu et appliqué pendant un temps très bref contre la surface la pâte, puis remonté. On mesure alors la force nécessaire pour décoller le module cylindrique de l'échantillon.

Par exemple, la pâte constituant la bande 1 et la deuxième pâte constituant les bandes 31 contiennent de l'eau, des matières solides non grasses, et éventuellement des additifs, et le rapport pondéral E/S entre l'eau et les matières solides non grasses de la deuxième pâte est différente du rapport pondéral E/S de la première pâte.

De la sorte, la deuxième pâte présente à l'état cru une viscoélasticité différente de celle de la première pâte à l'état cru et il en résulte non seulement qu'une des pâtes est plus malléable, mais également plus "collante" que l'autre pâte.

Lors de son incorporation à la première pâte, la deuxième pâte vient ainsi adhérer à la première pâte et ce d'autant plus que la différence de viscoélasticité est plus élevée. Cet accrochage est en particulier dû à un phénomène de diffusion à l'interface entre les deux pâtes, qui est dû à la différence de teneur en eau et/ou en matière grasse. En général, on choisit un rapport pondéral E/S compris entre 0,2 et 0,4 pour une des pâtes par exemple la première pâte et entre 0,3 et 0,8 pour l'autre pâte, par exemple la deuxième pâte, tout en choisissant bien entendu pour les deux pâtes des rapports E/S différents, le rapport entre les rapports pondéraux E/S des deux pâtes étant de préférence compris entre 1,2 et 2,5.

Dans le cas où la viscoélasticité des bandes 31₁ ou 31₂ est supérieure à celle de la bande 1, la viscoélasticité des bandes 31₁ ou 31₂ ne doit pas être trop élevée de manière à permettre son incorporation dans la bande 1.

La force d'adhésion entre les deux pâtes est supérieure à la force d'adhésion de la bande 31 et des cylindres constituant les dispositifs 10, 11, 12, 13 et 15.

En outre, cette force d'adhésion entre les deux pâtes est également supérieure à la force d'adhésion entre les bandes 31 et le tapis en matière plastique ou en tissu des convoyeurs-bande 20. Dans le cas où la deuxième pâte a une viscoélasticité supérieure à celle de la première pâte, il faut que les rapports pondéraux E/S de la première et de la deuxième pâte soient suffisamment différents. Il existe cependant une limite à partir de laquelle la pâte 31 tend à devenir trop collante et à adhérer au tapis des convoyeurs 20. On choisira en pratique un rapport entre le rapport pondéral E/S de la deuxième pâte et le rapport pondéral E/S de la-première pâte qui sera compris de préférence entre 1,2 et 2,5 et de préférence voisin de 1,8. La teneur pondérale en matières solides non grasses sera choisie par exemple entre 40 et 65%, étant entendu que la teneur pondérale en matières solides non grasses de la deuxième pâte sera en général inférieure à la teneur pondérale en matières solides non grasses de la première pâte.

### EXEMPLE

Des biscuits de type "crackers" sont réalisés conformément à la figure 2. Les bandes 31 (31₁ et/ou 31₂) sont extrudées dans des extrudeuses 30 du type comportant deux rouleaux d'extrusion cannelés extrudant les bandes 31 à travers une ouverture circulaire ou rectangulaire d'une tête d'extrusion.

La pâte ("pâte blanche") constituant la bande 1 a la composition suivante (les proportions indiquées sont pondérales) :

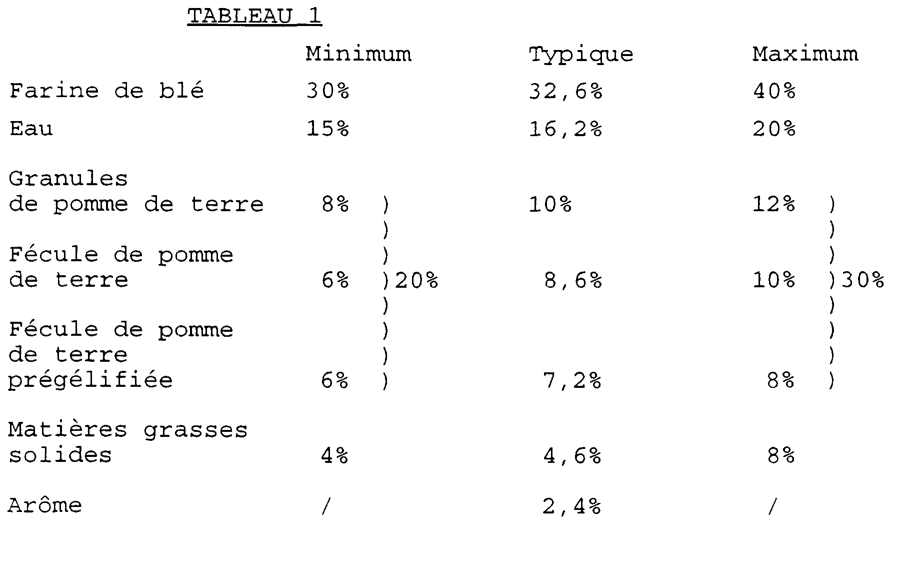

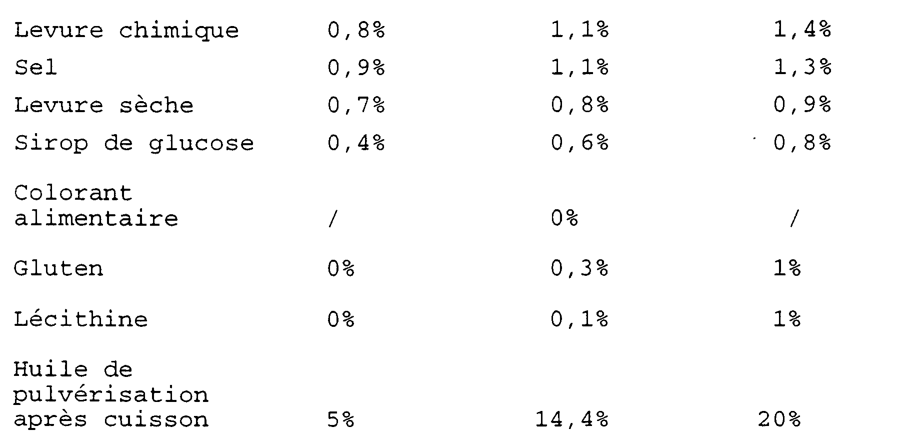

| Rapport E/S "pâte blanche" | | |
|---|---|---|
| Minimal : E = 15% | S = 40 + 30 = 70% | E/S = 0,2 |
| Typique : E = 16,2% | S = 58,4% | E/S = 0,27 |
| Maximal : E = 20% | S = 20 + 30 = 50% | E/S = 0,4 |

A une Bande 1 ayant une composition conforme au tableau 1, on incorpore des bandes colorées réalisées en une pâte colorée, par exemple une pâte parfumée au bacon et dont la couleur rappelle celle du bacon, et qui a la composition suivante :

**TABLEAU 2**

| | Minimum | Typique | Maximum |
|---|---|---|---|
| Farine de blé | 25 % | 27,9 % | 35 % |
| | | | |
| Eau | 20 % | 25,6 % | 35 % |
| | | | |
| Granules de pomme de terre | 7 % | 9 % | 11 % |
| | | | |
| Fécule de pomme de terre | 6 % | 7,8 % | 10 % |
| Fécule de pomme de terre prégélifiée | 5,5 % | 6,5 % | 7,5 % |
| | | | |
| Matières grasses solides | 3,5 % | 4 % | 4,5 % |
| | | | |
| Arômes | / | 2,6 % | / |
| Levure chimique | 0,7 % | 1 % | 1,3 % |
| | | | |
| Sel | 0,6 % | 0,8 % | 1 % |
| | | | |
| Levure sèche | 0,7 % | 0,8 % | 0,9 % |
| | | | |
| Sirop de glucose | 0,3 % | 0,5 % | 0,7 % |
| | | | |
| Colorant alimentaire | / | 0,4 % | / |
| | | | |
| Gluten | 0 % | 0,3 % | 1 % |
| | | | |
| Lécithine | 0 % | 0,1 % | 1 % |
| | | | |
| Huile de pulvérisation après cuisson | 5 % | 12,7 % | 20 % |

| Rapport E/S : "pâte colorée" : | | |
|---|---|---|
| Minimal E = 20% - | S = 35+11+10+7,5 = 63,5% | E/S = 0,3 |
| Typique E = 25,6% | S = 51,2% | E/S = 0,5 |
| Maximal E = 35% | S = 25+ 7+ 6+5,5 = 43,5% | E/S = 0,8 |

Le rapport entre la valeur typique de E/S de la deuxième pâte (0,5) et de la première pâte (0,27) est égal à 1,8.

L'invention ne se limite pas aux modes de réalisation décrits et représentés.

En particulier, les bandes ou "spaghettis" 31 peuvent être obtenus autrement que par extrusion, par exemple à partir d'une bande laminée et/ou feuilletée découpée en lanières.

L'incorporation des bandes 31 à la surface inférieure de la bande 1 peut s'effectuer également en amont d'un dispositif de calibrage 11, 12 ou 13, par exemple en logeant les têtes d'extrusion 30 entre l'extrémité aval du convoyeur correspondant 20 et le cylindre inférieur du dispositif de calibrage, ou bien encore immédiatement en amont du roto-découpoir 15.

L'incorporation des bandes 31 à la surface supérieure de la bande 1 peut s'effectuer également en amont du feuilleteur 10.

L'invention s'applique également au cas des bandes principales et/ou additionnelles qui sont seulement laminées ou qui sont seulement feuilletées, ou bien seulement extrudées.

L'invention peut être mise en oeuvre dans un grand nombre de produits par exemple les biscuits ou "crackers" laminés (biscuits secs, "crackers" fermentés, biscuits salés pour apéritif, biscuits "snack") ou bien encore dans tous les autres produits cuits au four, par exemple les "Petits Beurre".

L'invention s'applique également à des produits qui ne sont pas revêtus d'huile de pulvérisation après leur cuisson.

## Revendications

1. Produit à base de pâte laminée et/ou feuilletée et/ou extrudée tel que biscuit, "cracker", ou analogue, réalisé en une première pâte, **caractérisé en ce qu'**il comporte sur au moins une face au moins une strie incorporée en surface à la première pâte et réalisée en au moins une deuxième pâte de composition différente de la première pâte.

2. Produit selon la revendication 1, **caractérisé en ce que** la ou les stries présentent au moins une couleur et/ou au moins une propriété organoleptique différente de celle du reste du produit.

3. Procédé de fabrication d'une pâte laminée et/ou feuilletée et/ou extrudée comportant une bande principale (1) continue d'une première pâte ayant une première largeur L et entraînée par un tapis d'entraînement **caractérisé en ce qu'**il comporte une étape d'incorporation en surface à la bande principale (1) d'au moins une bande additionnelle (31) d'au moins une deuxième pâte ayant une deuxième largeur 1 inférieure à la première largeur L et présentant une viscoélasticité plus élevée que la première pâte constituant la bande principale (1).

4. Procédé selon la revendication 3, **caractérisé en ce que** la première et la deuxième pâtes présentent de l'eau, des matières solides non grasses et des matières grasses et éventuellement des additifs, et **en ce que** le rapport pondéral E/S entre l'eau et les matières solides non grasses de la deuxième pâte est différent de celui de la première pâte.

5. Procédé selon la revendication 4, **caractérisé en ce que** ledit rapport pondéral E/S est compris entre 0,2 et 0,4 pour une des pâtes et entre 0,3 et 0,8 pour l'autre pâte.

6. Procédé selon une des revendications 3 à 5, **caractérisé en ce que** ladite bande additionnelle (31) est extrudée.

7. Procédé selon une des revendications 3 à 6, **caractérisé en ce que** la bande additionnelle (31) est maintenue en tension lors de l'étape d'incorporation.

8. Procédé selon la revendication 7, **caractérisé en ce que** ladite mise en tension est obtenue en adoptant pour la fourniture de la bande additionnelle une vitesse sensiblement inférieure à celle de la bande principale.

9. Procédé selon une des revendications 3 à 8, **caractérisé en ce qu'**il comporte l'incorporation d'au moins une dite bande additionnelle (31₁) sur la face inférieure de la bande principale.

10. Procédé selon la revendication 9, **caractérisé en ce que** la viscoélasticité de la deuxième pâte est choisie de manière telle que son adhérence à la première pâte est supérieure à son adhérence au tapis d'entraînement de la bande principale.

11. Procédé selon une des revendications 9 ou 10, **caractérisé en ce que** ladite incorporation d'au moins une bande additionnelle (31₁) sur la face inférieure (37) de la bande principale s'effectue en amont d'un dispositif feuilleteur (10).

12. Procédé selon une des revendications 3 à 11, **caractérisé en ce qu'**il comporte l'incorporation d'au moins une dite bande additionnelle (31₂) sur la face supérieure (38) de la bande principale (1).

13. Procédé selon la revendication 12, **caractérisé en ce que** ladite incorporation d'au moins une bande additionnelle (31₂) sur la face supérieure (38) de la bande principale s'effectue en amont d'un dispositif de calibrage (11, 12, 13) ou en amont d'un découpoir (15).

14. Procédé selon une des revendications 3 à 13, **caractérisé en ce que** le rapport entre ledit rapport pondéral E/S de la deuxième pâte et ledit rapport pondéral E/S de la première pâte est compris entre 1,2 et 2,5, et de préférence sensiblement égal à 1,8.

15. Procédé selon une des revendications 3 à 14, **caractérisé en ce que** les bandes additionnelles (31) présentent des couleurs et/ou des propriétés organoleptiques différentes de celles de la bande principale (1).

16. Procédé selon une des revendications 3 à 15, **caractérisé en ce que** ladite incorporation d'au moins une bande additionnelle (31) d'une deuxième pâte s'effectue selon un trajet en zigzag.

17. Procédé selon une des revendications 3 à 16, **caractérisé en ce que** la première pâte comporte tout d'abord entre 30 et 40% en poids de farine d'au moins une céréale, entre 20 et 30% de fécule et/ou d'amidon et/ou de pomme de terre déshydratée et/ou de manioc déshydraté, entre 15 et 20% d'eau, entre 4 et 8% de matières grasses solides, et le reste étant constitué par au moins un agent additionnel tel que la levure et/ou la poudre levante et/ou le levain et/ou le sel et/ou au moins un colorant alimentaire et/ou un arôme et/ou la lécithine, et/ou le sirop de glucose et/ou le gluten et/ou une ou plusieurs enzymes, puis après cuisson entre 5 et 20% d'huile de pulvérisation.

18. Procédé selon une des revendications 3 à 17, **caractérisé en ce que** la deuxième pâte comporte tout d'abord entre 25 et 35% en poids de farine de céréale, entre 15 et 25% de fécule et/ou d'amidon et/ou de pommes de terre déshydratées et/ou de manioc déshydraté, entre 20 et 35% d'eau, entre 3 et 7% de matières grasses solides, et le reste étant constitué par au moins un agent additionnel tel que la levure et/ou la poudre levante et/ou le levain et/ou le sel et/ou au moins un colorant alimentaire et/ou un arôme et/ou la lécithine, et/ou le sirop de glucose et/ou le gluten, puis après cuisson entre 5 et 20% d'huile de pulvérisation.

## Patentansprüche

1. Produkt auf der Basis von laminiertem Teig und/oder Blätter- und/oder Spritzteig, wie Biskuit, "Cracker" oder ähnliches, hergestellt aus einem ersten Teig, dadurch g e**kennzeichnet**, dass es auf wenigstens einer Seite wenigstens einen Streifen hat, der in die Oberfläche auf dem ersten Teig inkorporiert und aus wenigstens einem zweiten Teig von gegenüber dem ersten Teig unterschiedlicher Zusammensetzung hergestellt ist.

2. Produkt gemäß Anspruch 1, **dadurch gekennzeichnet, dass** der oder die Streifen wenigstens eine Farbe und/oder wenigstens eine organoleptische Eigenschaft aufweist bzw. aufweisen, die unterschiedlich gegenüber derjenigen des Rests des Produkts ist bzw. sind.

3. Verfahren zur Herstellung eines laminierten Teigs und/ oder Blätter- und/oder Spritzteigs, enthaltend ein kontinuierliches Hauptband (1) eines ersten Teigs, das eine erste Breite L hat und durch ein Antriebsband angetrieben wird, **dadurch gekennzeichnet, dass** es einen Schritt der Inkorporation von wenigstens einem zusätzlichen Band bzw. Streifen (31) wenigstens eines zweiten Teigs in die Oberfläche des Hauptbands (1) enthält, das bzw. der eine zweite Breite 1 hat, die kleiner als die erste Breite L ist, und eine höhere Viskoelastizität als der erste Teig, der das Hauptband (1) bildet, aufweist.

4. Verfahren gemäß Anspruch 3, **dadurch gekennzeichnet, dass** der erste und der zweite Teig Wasser, fettfreie Feststoffe und Fettstoffe sowie eventuell Zusätze aufweist und dass das Massenverhältnis E/S zwischen dem Wasser und den fettfreien Feststoffen des zweiten Teigs unterschiedlich von demjenigen des ersten Teigs ist.

5. Verfahren gemäß Anspruch 4, **dadurch gekennzeichnet, dass** das Massenverhältnis E/S zwischen 0,2 und 0,4 für einen der Teige und zwischen 0,3 und 0,8 für den anderen Teig ist.

6. Verfahren gemäß einem der Ansprüche 3 bis 5, **dadurch gekennzeichnet, dass** das zusätzliche Band bzw. der zusätzliche Streifen (31) extrudiert bzw. gespritzt wird.

7. Verfahren gemäß einem der Ansprüche 3 bis 6, **dadurch gekennzeichnet, dass** das zusätzliche Band bzw. der zusätzliche Streifen (31) während des Schritts der Inkorporation in Spannung gehalten wird.

8. Verfahren gemäß Anspruch 7, **dadurch gekennzeichnet, dass** das In-Spannung-Setzen erhalten wird, indem man für die Aufbringung des zusätzlichen Bands eine Geschwindigkeit wählt, die merklich unterhalb jener des Hauptbands ist.

9. Verfahren gemäß einem der Ansprüche 3 bis 8, **dadurch gekennzeichnet, dass** es die Inkorporation von wenigstens einem genannten zusätzlichen Band bzw. Streifen (31₁) auf der unteren Seite des Hauptbands enthält.

10. Verfahren gemäß Anspruch 9, **dadurch gekennzeichnet, dass** die Viskoelastizität des zweiten Teigs in der Weise gewählt wird, dass sein Anhaften an dem ersten Teig größer als sein Anhaften an dem Antriebsband des Hauptbands ist.

11. Verfahren gemäß einem der Ansprüche 9 oder 10, **dadurch gekennzeichnet, dass** die Inkorporation von wenigstens einem zusätzlichen Band bzw. Streifen (31₁) auf der unteren Seite (37) des Hauptbands stromaufwärts von einer Blätterbildungseinrichtung (10) geschieht.

12. Verfahren gemäß einem der Ansprüche 3 bis 11, **dadurch gekennzeichnet, dass** es die Inkorporation von wenigstens einem genannten zusätzlichen Band bzw. Streifen (31₂) auf der oberen Seite (38) des Hauptbands (1) enthält.

13. Verfahren gemäß Anspruch 12, **dadurch gekennzeichnet, dass** die Inkorporation von wenigstens einem zusätzlichen Band bzw. Streifen (31₂) auf der oberen Seite (38) des Hauptbands stromaufwärts von einer Kalibriereinrichtung (11, 12, 13) oder stromaufwärts von einem Zerschneider (15) geschieht.

14. Verfahren gemäß einem der Ansprüche 3 bis 13, **dadurch gekennzeichnet, dass** das Verhältnis zwischen dem Massenverhältnis E/S des zweiten Teigs und dem Massenverhältnis E/S des ersten Teigs zwischen 1,2 und 2,5 ist und vorzugsweise im wesentlichen gleich 1,8 ist.

15. Verfahren gemäß einem der Ansprüche 3 bis 14, **dadurch gekennzeichnet, dass** die zusätzlichen Bänder bzw. Streifen (31) Farben und/oder organoleptische Eigenschaften aufweisen, die unterschiedlich von jenen des Hauptbands (1) sind.

16. Verfahren gemäß einem der Ansprüche 3 bis 15, **dadurch gekennzeichnet, dass** die Inkorporation von wenigstens einem zusätzlichen Band bzw. Streifen (31) eines zweiten Teigs gemäß einem Zickzackverlauf geschieht.

17. Verfahren gemäß einem der Ansprüche 3 bis 16, **dadurch gekennzeichnet, dass** der erste Teig anfangs zwischen 30 und 40 Gew.-% an Mehl von wenigstens einem Getreide, zwischen 20 und 30 % Stärkemehl und/oder Stärke und/oder entwässerte Kartoffel und/oder entwässerten Maniok, zwischen 15 und 20 % Wasser, zwischen 4 und 8 % feste Fettstoffe enthält und der Rest von wenigstens einem Zusatzmittel gebildet ist, wie Hefe und/oder Hefepulver und/oder Sauerteig bzw. Treibmittel und/oder Salz und/oder wenigstens ein Lebensmittelfärbungsmittel und/oder ein Aroma und/oder Lecithin und/oder Glukosesirup und/oder Gluten und/oder einem oder mehreren Enzymen, dann nach dem Backen zwischen 5 und 20 % Sprühöl.

18. Verfahren nach einem der Ansprüche 3 bis 17, **dadurch gekennzeichnet, dass** der zweite Teig anfangs zwischen 25 und 35 Gew.-% Getreidemehl, zwischen 15 und 25 % Stärkemehl und/oder Stärke und entwässerte Kartoffel und/oder entwässerten Maniok, zwischen 20 und 35 % Wasser, zwischen 3 und 7 % feste Fettstoffe enthält und der Rest von wenigstens einem Zusatzmittel gebildet ist, wie Hefe und/oder Hefepulver und/oder Sauerteig bzw. Treibmittel und/oder Salz und/oder wenigstens ein Lebensmittelfärbungsmittel und/oder ein Aroma und/oder Lecithin und/oder Glukosesirup und/oder Gluten, dann nach dem Backen zwischen 5 und 20 % Sprühöl.

## Claims

1. A product based on rolled and/or sheeted and/or extruded dough, such as a biscuit, a cracker, or the like, made from a first dough and **characterized in that** it includes on at least one face at least one stripe incorporated in the surface of the first dough and made of at least one second dough of different composition to the first dough.

2. A product according to claim 1, **characterized in that** the stripe(s) present at least one color and/or at least one organoleptic property different from that of the remainder of the product.

3. A method of manufacturing a rolled and/or sheeted and/or extruded dough comprising a continuous main strip (1) of a first dough having a first width L and conveyed by a conveyor belt, the method being **characterized in that** it includes a step of incorporating in the surface of the main strip (1), at least one additional strip (31) of at least one second dough of a second width *l* smaller than the first width L, and having viscoelasticity higher than that of the first dough constituting the main strip (1).

4. A method according to claim 3, **characterized in that** the first and second doughs have water, non-fatty solids, and fats, together with optional additives, and **in that** the ratio W/S of weight of water over weight of non-fatty solids in the second dough is different from that in the first dough.

5. A method according to claim 4, **characterized in that** said W/S weight ratio lies in the range 0.2 to 0.4 for one of the doughs and in the range 0.3 to 0.8 for the other dough.

6. A method according to any one of claims 3 to 5, **characterized in that** said additional strip (31) is extruded.

7. A method according to any one of claims 3 to 6, **characterized in that** said additional strip (31) is kept under tension during the incorporation step.

8. A method according to claim 7, **characterized in that** said tensioning is obtained by supplying the additional strip at a speed that is perceptibly slower than that of the main strip.

9. A method according to any one of claims 3 to 8, **characterized in that** it includes incorporating at least one said additional strip (31₁) on the bottom face of the main strip.

10. A method according to claim 9, **characterized in that** the viscoelasticity of the second dough is selected so that it adheres to the first dough more strongly than it adheres to the conveyor belt for the main strip.

11. A method according to claim 9 or 10, **characterized in that** said incorporation of at least one additional strip (31₁) on the bottom face (37) of the main strip is performed upstream from a sheeter device (10).

12. A method according to any one of claims 3 to 11, **characterized in that** it includes incorporating at least one said additional strip (31₂) on the top face (38) of the main strip (1).

13. A method according to claim 12, **characterized in that** said incorporation of at least one additional strip (31₂) on the top face (38) of the main strip takes place upstream from a calibration device (11, 12, 13) or upstream from a cutter (15).

14. A method according to any one of claims 3 to 13, **characterized in that** the ratio between said W/S weight ratio of the second dough and said W/S weight ratio of the first dough lies in the range 1.2 to 2.5, and is preferably substantially equal to 1.8.

15. A method according to any one of claims 3 to 14, **characterized in that** the additional strips (31) have colors and/or organoleptic properties that are different from those of the main strip (1).

16. A method according to any one of claims 3 to 15, **characterized in that** said incorporation of at least one additional strip (31) of a second dough takes place along a zigzag path.

17. A method according to any one of claims 3 to 16, **characterized in that** the first dough comprises firstly 30% to 40% by weight flour of at least one cereal, 20% to 30% of starch and/or dehydrated potato and/or dehydrated cassava, 15% to 20% water, 4% to 8% solid fats, the remainder being constituted by at least one additional agent such as yeast and/or baking powder and/or leaven and/or salt and/or at least one food coloring agent and/or flavoring and/or lecithin and/or glucose syrup and/or gluten and/or one or more enzymes, and then after baking, 5% to 20% oil sprayed on.

18. A method according to any one of claims 3 to 17, **characterized in that** the second dough comprises firstly 25% to 35% by weight of cereal flour, 15% to 25% of starch and/or dehydrated potato and/or dehydrated cassava, 20% to 35% water, 3% to 7% solid fats, the remainder being constituted by at least one additional agent such as yeast and/or baking powder and/or leaven and/or a food coloring agent and/or flavoring and/or lecithin and/or glucose syrup and/or gluten, and then after baking, 5% to 20% oil sprayed on.
